# EUROPÄISCHE PATENTSCHRIFT

(11) **EP 1 460 312 B1**
(45) Veröffentlichungstag und Bekanntmachung des Hinweises auf die Patenterteilung: **13.09.2006**
(21) Anmeldenummer: 04014047.7
(22) Anmeldetag: 19.12.2001
(51) Int. Cl.: F16H 29/08, F16H 31/00

(54) **Vorrichtung zum Antreiben eines Ausgangsglieds**
Device for driving an output mechanism
Dispositif d'entraînement d'un organe de sortie

(30) Priorität: 23.12.2000 DE 10064899
(43) Veröffentlichungstag der Anmeldung: 22.09.2004
(62) Teilanmeldung aus: 01990320.2
(73) Patentinhaber: ROBERT BOSCH GMBH, 70442 Stuttgart (DE)
(72) Erfinder: Houben, Sjeng, 2382 Poppel (BE)
(74) Vertreter: Heyerhoff, Markus

(56) Entgegenhaltungen:
- EP-A- 0 073 923
- DE-B- 1 049 188
- DE-C- 259 132
- GB-A- 2 054 794
- GB-A- 191 024 157
- US-A- 3 726 149
- US-A- 3 848 474

## Beschreibung

### Stand der Technik

Die Erfindung betrifft eine Vorrichtung zum Antreiben eines Ausgangsglieds mit einer rotierenden Eingangswelle.

Aus dem Stand der Technik sind Vorrichtungen zum Antreiben eines Ausgangsglieds mit einer rotierenden Eingangswelle bekannt, die in Bohrmaschinen, Schlagbohrern oder dergleichen Verwendung finden. Derartige Vorrichtungen weisen zwischen der Eingangswelle und dem Ausgangsglied mehrere als Übersetzung vorgesehene und eine formschlüssige Verbindung zwischen der Eingangswelle und dem Ausgangsglied ausbildende Zahnräder auf, um eine als Antrieb dienende hohe Drehzahl der Eingangswelle in eine niedrigere Bewegungsfrequenz bzw. Drehzahl des Ausgangsglieds bei gleichzeitiger Erhöhung der auf das Ausgangsglied zu übertragenden Antriebskraft zu transformieren. DE-B-10 49 188 offenbart eine Vorrichtung mit den Merkmalen des Oberbegriffs des Anspruchs 1. Nachteilig dabei ist jedoch, dass der Einsatz von Zahnrädern hohe Fertigungskosten bei der Herstellung der bekannten Vor-richtungen verursacht und bei einer Verwendung in Bohrmaschinen, Schlaghämmern oder Bohrschlaghämmern deren Gesamtkosten erhöhen.

Aus der GB 24157 A.D. 1910 ist eine Vorrichtung zum Antreiben eines Ausgangsglieds mit einer rotierend antreibbaren Eingangswelle bekannt, wobei zwischen der Eingangswelle und dem Ausgangsglied Mittel zum Übertragen eines Antriebsmoments der Eingangswelle auf das Ausgangsglied angeordnet sind. Zwischen einem ersten Mittel und dem Ausgangsglied ist eine kraftschlüssige Wirkverbindung herstellbar, mittels der eine alternierende Bewegung des ersten Mittels in eine Bewegung des Ausgangsglieds umwandelbar ist. Die kraftschlüssige Wirkverbindung ist durch eine Spannkraft eines Federelements gesteuert.

Ein zweites Mittel ist mit dem ersten Mittel über einen Mitnehmer um einen Drehpunkt drehbar verbunden. Das zweite Mittel ist drehbar auf einer Achse gelagert und mit einem von der Achse radial nach außen gerichteten Arm versehen. Das erste Mittel und das zweite Mittel sind derart drehend miteinander verbunden, dass eine alternierende Bewegung des ersten Mittels eine Drehbewegung des Arms um die Achse und ein Verklemmen eines Übertragungselements bewirkt. Das Übertragungselement ist zwischen einer Innenfläche eines das zweite Mittel umgebenden koaxial zu der Achse angeordneten Ringelements und dem dem Ringelement zugewandten Ende des Arms angeordnet.

### Vorteile der Erfindung

Die Erfindung geht aus von einer Vorrichtung zum Antreiben eines Ausgangsglieds mit einer rotierend antreibbaren Eingangswelle, wobei zwischen der Eingangswelle und dem Ausgangsglied Mittel zum Übertragen eines Antriebsmoments der Eingangswelle auf das Ausgangsglied angeordnet sind, wobei zwischen einem ersten Mittel und dem Ausgangsglied eine kraftschlüssige Wirkverbindung herstellbar ist, mittels der eine alternierende Bewegung des ersten Mittels in eine Bewegung des Ausgangsglieds umwandelbar ist, wobei die Mittel derart ausgebildet sind, dass die alternierende Drehbewegung des ersten Mittels in eine translatorische Bewegung des Ausgangsglieds umwandelbar ist.

Es wird vorgeschlagen, dass an dem ersten Mittel wenigstens ein Hebelelement drehbar befestigt ist, über welches das erste Mittel mit wenigstens einem Greifelement in Wirkverbindung steht. Dadurch kann vorteilhaft eine Vorrichtung erreicht werden, in der eine alternierende Bewegung des Eingangsglieds in eine translatorische Bewegung des Ausgangsglieds umwandelbar ist. Zudem erfolgt der Antrieb des Ausgangsglieds in einfacher Art und Weise ohne Zahnräder, wodurch die Herstellkosten vorteilhafterweise erheblich reduziert werden, und zwar speziell bei größeren Übersetzungen.

Darüber hinaus bietet die erfindungsgemäße Vorrichtung den Vorteil, dass eine hohe Drehzahl der Eingangswelle in eine erheblich langsamere Bewegung bzw. Bewegungsfrequenz des Ausgangsglieds umwandelbar und dabei eine erwünschte große Antriebskraft des Ausgangsglieds erzeugbar ist.

### Zeichnung

Weitere Vorteile ergeben sich aus der folgenden Zeichnungsbeschreibung. In der Zeichnung sind mehrere Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Ausführungsform der erfindungsgemäßen Vorrichtung, wobei eine rotatorische Bewegung der Eingangswelle in eine translatorische Bewegung des Ausgangsglieds umgewandelt wird und
- Fig. 2: eine Umschalteinrichtung der Vorrichtung gemäß Fig. 1.

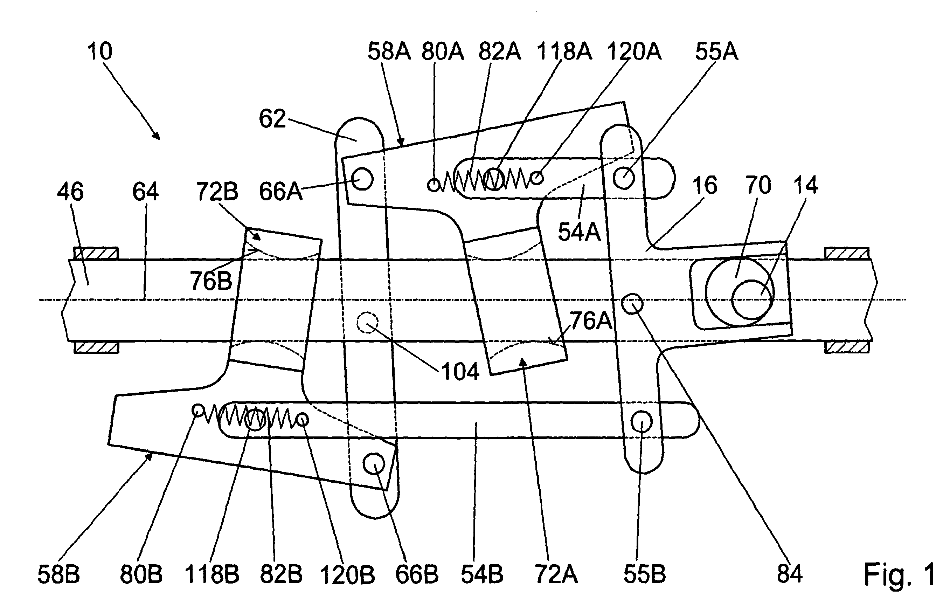

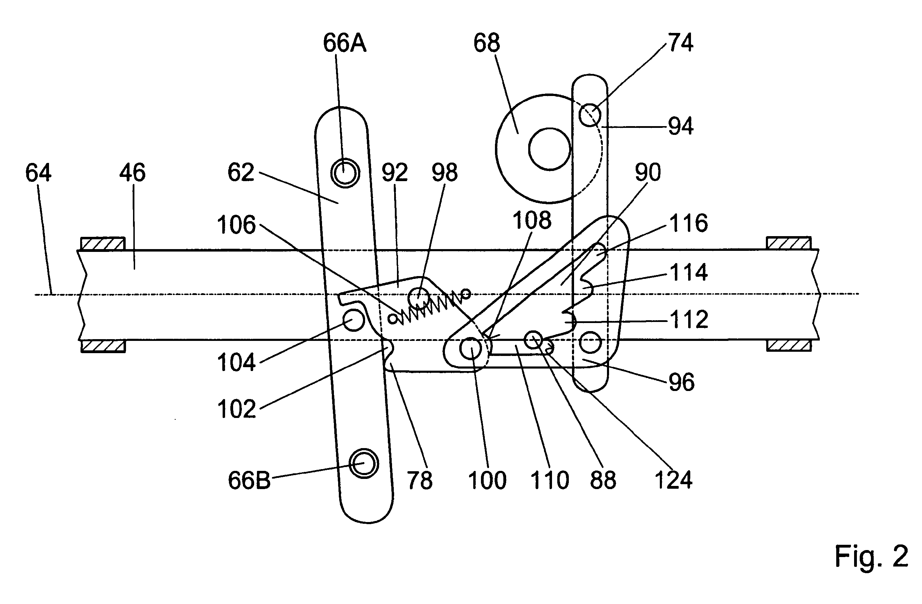

In Fig. 1 und Fig. 2 ist eine Vorrichtung 10 zum Antreiben eines Ausgangsglieds 46 mit einer rotierend antreibbaren Eingangswelle 14 der Vorrichtung 10, die gleichzeitig die Ausgangswelle eines nicht näher dargestellten Elektromotors ist, dargestellt. Zwischen der Eingangswelle 14 und dem Ausgangsglied 46 sind Mittel 16, 58 zum Übertragen eines Antriebsdrehmoments der Eingangswelle 14 auf das Ausgangsglied 46 angeordnet.

Dargestellt ist eine Ausführungsform der Vorrichtung 10, bei der eine alternierende Schwenkbewegung eines ersten Mittels 16, welche durch eine Rotation der Eingangswelle 14 ausgelöst wird, in eine translatorische Bewegung des als Werkzeugaufnahme einer Fuchsschwanzsäge oder dergleichen ausgebildeten Ausgangsglieds 46 umgewandelt wird. Das erste Mittel 16 ist T-förmig ausgeführt, und zwar mit einem ersten im Wesentlichen senkrecht zum Ausgangsglied 46 verlaufenden Querbalken und einem im Wesentlichen parallel zum Ausgangsglied 46 verlaufenden Schenkel.

Im Scheitelpunkt des Querbalkens und des Schenkels ist das erste Mittel 16 schwenkbar in einer Lagerstelle 84 gelagert. Der Schenkel ist an seinem Ende gabelförmig ausgeführt und umgreift einen von der Eingangswelle 14 angetriebenen Exzenter 70. An den Enden des Querbalkens des ersten Mittels 16 bzw. der Schwinge des Mittels 16 sind zwei Hebelelemente 54A, 54B über als Drehpunkte dienende Bolzen 55A, 55B drehbar befestigt. Die zwei Hebelelemente 54A, 54B verlaufen im Wesentlichen parallel zum Ausgangsglied 46 und stellen zwischen der Schwinge des Mittels 16 und zwei Greifelementen 58A, 58B über zwei Lagerbolzen 118A, 118B eine Wirkverbindung her.

Die beiden Greifelemente 58A, 58B sind über ein weiteres, im Wesentlichen quer zum Ausgangsglied 46 verlaufendes Hebelelement 62 miteinander verbunden und in Abhängigkeit der alternierenden Bewegung der Schwinge des Mittels 16 gegenüber einer Mittellinie 64 des Ausgangsglieds 46 kippbar.

Das weitere Hebelelement 62 ist über zwei Stifte 66A, 66B, mit den Greifelementen 58A, 58B gelenkig verbunden. Im Betrieb werden die beiden Stifte 66A, 66B annähernd parallel zu der Mittelachse 64 des Ausgangsglieds 46 translatorisch verschoben. Um eine derartige Bewegung der Stifte 66A, 66B zu gewährleisten, sind Bohrungen zur Aufnahme der Stifte 66A, 66B des weiteren Hebelelements 62 mit einem größeren Durchmesser ausgebildet als die Durchmesser der Stifte 66A, 66B.

Die Schwinge des Mittels 16 ist von der Eingangswelle 14 über den Exzenter 70 in ihrer Bewegung alternierend antreibbar, und zwar um ihre Lagerstelle 84 schwenkbar im Uhrzeigersinn und entgegen dem Uhrzeigersinn. Die beiden Greifelemente 58A, 58B übergreifen zu einer Übertragung der alternierenden Bewegung der Schwinge des Mittels 16 das Ausgangsglied 46 jeweils mit einem nabenförmigen Greifarm 72A, 72B. Die Greifarme 72A, 72B weisen an ihren, dem Ausgangsglied 46 zugewandten Innenseiten 76A, 76B eine in Richtung des Ausgangsglieds 46 gerichtete Wölbungen auf, die mit dem Ausgangsglied 46 in Kontakt stehen.

Die Greifarme 72A, 72B und das Ausgangsglied 46 sind derart zueinander angeordnet, dass bei einer Schwenkbewegung der Schwinge des Mittels 16 entgegen dem Uhrzeigersinn das Greifelement 58A mit dem Ausgangsglied 46 verklemmt und eine schrittweise translatorische Bewegung des Ausgangsglieds 46 in die von der Eingangswelle 14 abgewandte Richtung bewirkt und das zweite Greifelement 58B das Ausgangselement 46 dabei gleichzeitig freigibt.

Bei einer Schwenkbewegung der Schwinge des Mittels 16 im Uhrzeigersinn verklemmt das Greifelement 58B mit dem Ausgangsglied 46 und bewirkt eine schrittweise translatorische Bewegung des Ausgangsglieds 46 in die von der Eingangswelle 14 abgewandte Richtung, wobei das erste Greifelement 58A das Ausgangsglied 46 dabei gleichzeitig freigibt.

Zwischen einer Befestigung 80A des ersten Greifelements 58A und einer Befestigung 120A des ersten Hebelelements 54A und zwischen einer Befestigung 80B des zweiten Greifelements 58B und einer Befestigung 120B des zweiten Hebelelements 54B ist jeweils ein Federelement 82A, 82B angeordnet, das zwei stabile Endlagen der Greifelemente 58A, 58B sicherstellt.

Es liegt selbstverständlich im Ermessen des Fachmanns, unter Berücksichtigung des jeweilig vorliegenden Anwendungsfalls abweichend von der in Fig. 1 dargestellten Anzahl der Greifelemente 58A, 58B auch mehr oder weniger hintereinander an dem Ausgangsglied 46 angeordnete Greifelemente zum Antreiben des Ausgangsglieds 46 vorzusehen.

Bezugnehmend auf Fig. 2 ist eine automatisch arbeitende Umschalteinrichtung zum Umkehren der Bewegungsrichtung des Ausgangsglieds 46 dargestellt. Dabei ist ein Bolzen 88 mit dem Ausgangsglied 46 verbunden. Der Bolzen 88 greift in eine Öffnung 90 eines zwischen einem Schnappelement 92 und einem dritten, im Wesentlichen quer zum Ausgangsglied 46 verlaufenden Hebelelement 94 kippbar angeordneten dreieckförmigen Plattenelements 96 ein. Das Schnappelement 92 ist über einen weiteren Bolzen 98 in einem nicht näher dargestellten Gehäuse der Vorrichtung 10 drehbar gelagert und über einen Bolzen 100 mit dem Plattenelement 96 drehbar verbunden. Weiter weist das Schnappelement 92 an seinem dem Plattenelement 96 abgewandten Ende eine wellenförmige Aussparung 102 auf, in welcher ein mit dem weiteren Hebelelement 62 fest verbundener Stift 104 angeordnet ist.

Eine Feder 106, die mit ihrem einen Ende fest mit dem Gehäuse der Vorrichtung 10 und mit ihrem anderen Ende mit dem Schnappelement 92 verbunden ist, bewirkt, dass das Schnappelement 92 stets mit seiner Aussparung 102 am Stift 104 anliegt.

Bei einer Bewegung des Plattenelements 96 durch das Ausgangsglied 46 in Richtung des Schnappelements 92, welche in Folge der alternierenden Bewegung der Greifelemente 58A, 58B bewirkt wird, kommt der Bolzen 88 nach einem bestimmten Verschiebeweg des Ausgangsglieds 46 mit einer Fläche 108 in Anlage, wobei die Fläche 108 ein Ende eines Schlitzes 110 der Öffnung 90 bildet.

Wird der Bolzen 88 nach Anlage an der Fläche 108 weiter in Richtung des Schnappelements 92 verschoben, wird eine Drehbewegung des Schnappelements 92 im Uhrzeigersinn um den Bolzen 98 ausgelöst. Dabei bewirkt die Feder 106, dass zwei stabile Endstellungen erreicht werden.

Daraus resultiert eine Verschiebung des Hebelsystems gemäß Fig. 1 derart, dass das weitere Hebelelement 62 die durch die Federelemente 82A, 82B in Bezug auf ihre zugehörigen Hebelelemente 54A bzw. 54B positionierten Greifelemente 58A und 58B verschiebt bzw. antreibt, und zwar wird das Hebelelement 62 mit seinem Stift 104 quer zum Ausgangsglied 46 ausgehend vom Stift 66B in Richtung Stift 66A verschoben, wodurch das Greifelement 58A im Uhrzeigersinn und das Greifelement 58B gegen den Uhrzeigersinn verkippt werden. Die Federelemente 82A, 82B stellen nunmehr den Kraftschluss für die entgegengesetzte Bewegungsrichtung des Ausgangsglieds 46 sicher. Infolgedessen wird anschließend das Ausgangsglied 46 in Bezug auf Fig. 2 von links nach rechts translatorisch angetrieben. Kommt der Bolzen 88 im Schlitz 110 an einer der Fläche 108 gegenüberliegenden Fläche 124 des Plattenelements 96 zur Anlage, wird die Umschalteinrichtung in ihre Ausgangsstellung zurückgestellt und das Ausgangsglied 46 in Bezug auf Fig. 2 wieder von rechts nach links translatorisch angetrieben.

Die Öffnung 90 des Plattenelements 96 bzw. deren Form ist derart vorgesehen, dass sie mehrere Führungsschlitze 112, 114 und 116 mit unterschiedlichen Längen aufweist. Das dritte Hebelelement 94 ist mit seinem der Verbindungsstelle mit dem Plattenelement 96 abgewandten Ende mit einer Drehscheibe 68 drehbar über einen Bolzen 74 verbunden. Eine Drehung der Drehscheibe 68 durch einen Bediener hat zur Folge, dass das Plattenelement 96 derart gekippt wird, dass für den Bolzen 88 je nach Anforderung ein gewünschter Führungsschlitz 110, 112, 114 oder 116 als Führung für die Bewegung des Bolzens 88 eingestellt ist, womit die Drehscheibe 68 ein Mittel zur Einstellung eines aus den einzelnen Hüben resultierenden Gesamthubs des Ausgangsglieds 46 bzw. eine Begrenzung des Stellweges darstellt.

### Bezugszeichen

- 10: Vorrichtung
- 14: Eingangswelle
- 16: Mittel
- 46: Ausgangsglied
- 54: Hebelelement
- 55: Bolzen
- 58: Greifelement
- 62: Hebelelement
- 64: Mittellinie
- 66: Stift
- 68: Drehscheibe
- 70: Exzenter
- 72: Greifarm
- 74: Bolzen
- 76: Innenseite
- 80: Befestigung
- 82: Federelement
- 84: Lagerstelle
- 88: Bolzen
- 90: Öffnung
- 94: Hebelelement
- 96: Plattenelement
- 98: Bolzen
- 100: Bolzen
- 102: Aussparung
- 104: Stift
- 106: Feder
- 108: Fläche
- 110: Schlitz
- 112: Führungsschlitz
- 114: Führungsschlitz
- 116: Führungsschlitz
- 118: Lagerbolzen
- 120: Befestigung
- 124: Fläche

## Patentansprüche

1. Vorrichtung (10) zum Antreiben eines Ausgangsglieds (46) mit einer rotierend antreibbaren Eingangswelle (14), wobei zwischen der Eingangswelle (14) und dem Ausgangsglied (46) Mittel zum Übertragen eines Antriebsmoments der Eingangswelle (14) auf das Ausgangsglied (46) angeordnet sind, wobei zwischen einem ersten Mittel (16) und dem Ausgangsglied (46) eine kraftschlüssige Wirkverbindung herstellbar ist, mittels der eine alternierende Bewegung des ersten Mittels (16) in eine Bewegung des Ausgangsglieds (46) umwandelbar ist, wobei die Mittel derart ausgebildet sind, dass die alternierende Drehbewegung des ersten Mittels (16) in eine translatorische Bewegung des Ausgangsglieds (46) umwandelbar ist, **dadurch gekennzeichnet, dass** an dem ersten Mittel (16) wenigstens ein Hebelelement (54) drehbar befestigt ist, über welches das erste Mittel (16) mit wenigstens einem Greifelement (58) in Wirkverbindung steht.

2. Vorrichtung nach Anspruch 1, **dadurch gekennzeichnet, dass** zwei Greifelemente (58) über ein weiteres Hebelelement (62) miteinander verschwenkbar verbunden sind und in Abhängigkeit der alternierenden Bewegung des ersten Mittels (16) mit dem Ausgangsglied (46) verklemmbar sind.

3. Vorrichtung nach Anspruch 1 oder 2, **dadurch gekennzeichnet, dass** das Greifelement (58) das Ausgangsglied (46) mit einem Greifarm (72) übergreift und die dem Ausgangsglied (46) zugewandten Innenseiten (76) des Greifarms (72) eine in Richtung des Ausgangsglieds (46) gerichtete Wölbung aufweisen, wobei die Wölbungen mit dem Ausgangsglied (46) in Kontakt stehen.

4. Vorrichtung nach einem der vorhergehenden Ansprüche, **dadurch gekennzeichnet, dass** die Eingangswelle (14) einen Exzenter (70) aufweist, der mit dem ersten Mittel (16) derart in Wirkverbindung steht, dass das erste Mittel (16) bei rotierender Eingangswelle (14) in Abhängigkeit einer Bewegung des Exzenters (70) alternierend bewegt wird.

5. Vorrichtung nach einem der vorhergehenden Ansprüche, **dadurch gekennzeichnet, dass** die kraftschlüssige Wirkverbindung durch eine Spannkraft eines Federelements (82) gesteuert ist.

6. Vorrichtung nach einem der vorhergehenden Ansprüche, **dadurch gekennzeichnet, dass** eine sich einstellende Übersetzung variierbar ist.

## Claims

1. Device (10) for driving an output member (46) by means of an input shaft (14) capable of being driven in rotation, means for transmitting a drive torque of the input shaft (14) to the output member (46) being arranged between the input shaft (14) and the output member (46), a non-positive operative connection capable of being made between a first means (16) and the output member (46), by means of which operative connection an alternating movement of the first means (16) can be converted into a movement of the output member (46), the means being designed in such a way that the alternating rotational movement of the first means (16) can be converted into a translational movement of the output member (46), **characterized in that** the first means (16) has fastened to it rotatably at least one lever element (54), via which the first means (16) is operatively connected to at least one gripping element (58).

2. Device according to Claim 1, **characterized in that** two gripping elements (58) are connected pivotably to one another via a further lever element (62) and can be clamped together with the output member (46) as a function of the alternating movement of the first means (16).

3. Device according to Claim 1 or 2, **characterized in that** the gripping element (58) engages with a gripping arm (72) over the output member (46), and the insides (76) of the gripping arm (72) which face the output member (46) have a curvature directed towards the output member (46), the curvatures being in contact with the output member (46).

4. Device according to one of the preceding claims, **characterized in that** the input shaft (14) has an eccentric (70) which is operatively connected to the first means (16) in such a way that, when the input shaft (14) rotates, the first means (16) is moved in alternation as a function of a movement of the eccentric (70).

5. Device according to one of the preceding claims, **characterized in that** the non-positive operative connection is controlled by means of a tension force of a spring element (82).

6. Device according to one of the preceding claims, **characterized in that** a step-up occurring is variable.

## Revendications

1. Dispositif (10) d'entraînement d'un organe de sortie (46) comprenant un arbre d'entrée (14) pouvant être entraîné en rotation, des moyens de transmission d'un couple d'entraînement de l'arbre d'entrée (14) disposés sur l'organe de sortie (46) entre l'arbre d'entrée (14) et l'organe de sortie (46), avec une liaison active par complémentarité de force pouvant être créée entre un premier moyen (16) et l'organe de sortie (46) pour convertir un mouvement alternatif du premier moyen (16) en un mouvement de translation de l'organe de sortie (46),
**caractérisé en ce qu'**
au moins un élément à levier (54) mettant le premier moyen (16) en liaison active avec au moins un élément de serrage (58), est fixé avec rotation possible sur le premier moyen (16).

2. Dispositif selon la revendication 1,
**caractérisé en ce que**
deux éléments de serrage (58) sont reliés pivotant l'un à l'autre par un autre élément à levier (62) et peuvent être coincés avec l'organe de sortie (46) en fonction du mouvement alternatif du premier moyen (16).

3. Dispositif selon la revendication 1 ou 2,
**caractérisé en ce que**
l'élément de serrage (58) prend l'organe de sortie (46) avec un bras de préhension (72) et les faces intérieures (76) tournées vers l'organe de sortie (46) présentent un bombement en direction de l'organe de sortie (46), les bombements étant en contact avec l'organe de sortie (46).

4. Dispositif selon l'une quelconque des revendications précédentes,
**caractérisé en ce que**
l'arbre d'entrée (14) présente un excentrique (70) en liaison active avec le premier moyen (16) de sorte que le premier moyen (16) se déplace en va-et-vient en fonction d'un mouvement de l'excentrique (70) lorsque l'arbre d'entrée (14) tourne.

5. Dispositif selon l'une quelconque des revendications précédentes,
**caractérisé en ce que**
la liaison active par complémentarité de force est commandée par une force de serrage d'un élément à ressort (82).

6. Dispositif selon l'une quelconque des revendications précédentes,
**caractérisé par** une démultiplication réglable variable.
